# EUROPÄISCHE PATENTSCHRIFT

(11) **EP 1 233 904 B1**
(45) Veröffentlichungstag und Bekanntmachung des Hinweises auf die Patenterteilung: **20.08.2003**
(21) Anmeldenummer: 00984867.2
(22) Anmeldetag: 20.10.2000
(51) Int. Cl.: B63H 21/17, B63G 8/08

(54) **ANTRIEBSEINRICHTUNG MIT ZWEI ANTRIEBSMOTOREN UNTERSCHIEDLICHER LEISTUNG FÜR EIN SCHIFF**
DRIVING DEVICE WITH TWO DRIVING MOTORS OF DIFFERENT CAPACITY FOR A VESSEL
DISPOSITIF D'ENTRAINEMENT COMPORTANT DEUX MOTEURS D'ENTRAINEMENT DE DIFFERENTE PUISSANCE POUR UN BATEAU

(30) Priorität: 30.11.1999 DE 19958783
(43) Veröffentlichungstag der Anmeldung: 28.08.2002
(73) Patentinhaber: SIEMENS AKTIENGESELLSCHAFT, 80333 München (DE)
(72) Erfinder: Wengler, Peter, 91058 Erlangen (DE); Meyer, Christian, 13591 Berlin (DE); Schuering, Ingo, 14621 Schoenwalde (DE)
(86) Internationale Anmeldenummer: DE0003794
(87) Internationale Veröffentlichungsnummer: WO01044046

(56) Entgegenhaltungen:
- WO-A-87/04303
- DE-A- 1 638 854
- FR-A- 2 202 807
- HACKMAN THOMAS: "ELECTRIC PROPULSION SYSTEMS FOR SHIPS. A NEW 'POWER PLANT CONCEPT' GIVES A BOOST TO THE MARINE SECTOR" ABB REVIEW, Nr. 3, Juni 1992 (1992-06), Seiten 3-12, XP000304699 ABB ASEA BROWN BOVERI, ZURICH., CH ISSN: 1013-3119
- MAGENS K: "PERMASYN - EIN PERMANENTERREGTER SYNCHRONMOTOR FUER DEN SCHIFFSBETRIEB. PERMASYN - A PERMANENT-FIELD, CONVERTER-FED MOTOR FOR PROPULSION SYSTEMS" JAHRBUCH DER SCHIFFBAUTECHNISCHEN GESELLSCHAFT., Bd. 81, 1987, Seiten 221-227, XP002043270 BERLIN, DE ISSN: 0374-1222 in der Anmeldung erwähnt
- "BOOSTER DRIVE 'ADDS ANOTHER CYLINDER'" THE MOTOR SHIP., Bd. 80, Nr. 952, November 1999 (1999-11), Seite 25 XP000877915 REED BUSINESS INFORMATION LTD, SURREY, GB ISSN: 0027-2000

## Beschreibung

Die Erfindung liegt auf dem Gebiet der Antriebe von elektrisch angetriebenen Fahrzeugen und dient der strukturellen und konstruktiven Ausgestaltung einer Antriebseinrichtung für ein Schiff, das im wesentlichen zwei Betriebsbereiche für einen über eine Antriebswelle elektromotorisch direkt angetriebenen Propeller aufweist, nämlich einen ersten Antriebsbereich für Propellerdrehzahlen bis etwa 30 % der Nenndrehzahl und einen zweiten Betriebsbereich für die darüber hinaus gehenden Propellerdrehzahlen bis zur Nenndrehzahl.

Eine bekannte Antriebseinrichtung dieser Art dient dem Antrieb von Marineschiffen wie Untersee-Booten und kann auch bei Überwasserschiffen eingesetzt werden. Die Antriebseinrichtung weist einen Synchronmotor mit einem durch Permanentmagnete erregten Rotor und mit einer verteilten Vielphasen-Ständerwicklung auf, bei der jeder Strang von einem eigenen Stromrichter gespeist wird. Dieser mehrsträngige Wechselstrommotor mit Stromrichterspeisung ist direkt - gegebenenfalls über eine Kupplung - an die den Propeller tragende Antriebswelle angekoppelt. Die Drehzahl des Motors ist im gesamten Leistungsbereich stufenlos einstellbar, wobei ein
U-Boot-Antrieb im wesentlichen in einem unteren Drehzahlbereich bis etwa 30 % der Nenndrehzahl für Schleichund Marschfahrt sowie in einem oberen Drehzahlbereich von etwa 50 bis 100 % der Nenndrehzahl für Schnellfahrt betrieben wird. Der Betrieb im niedrigen Drehzahlbereich ist die überwiegende Betriebsart. (Zeitschrift "Jahrbuch der schiffsbautechnischen Gesellschaft 81" (1987, Seiten 221 bis 227 und 229 bis 234). Die Antriebsenergie für den Motor wird dabei einem elektrischen Energievorrat entnommen (Batterie)und/oder von einem elektrischen Energieerzeuger, z. B. einem Dieselgeneratorsatz oder einer
Brennstoffzellenanlage, zugeführt. - Zur Optimierung des Wirkungsgrades einer solchen Antriebseinrichtung können einzelne Wicklungsteile der mehrsträngig ausgebildeten Ständerwicklung in Reihe oder parallel geschaltet werden; dies hat unter anderem zur Folge, daß der Gesamtwirkungsgrad der Antriebseinrichtung bis hinunter zur niedrigst zugelassenen Dauerdrehzahl höher liegt als bei herkömmlichen Antrieben. Bei kleinen Drehzahlen liegt der Wirkungsgrad nur unwesentlich unter dem Optimalwert bei hoher Drehzahl.

Für Überwasserschiffe in Form von z. B. großen Container-Transportschiffen ist an sich eine Antriebseinrichtung bekannt, bei der einem Dieselmotor großer Leistung ein Elektromotor kleinerer Leistung beigestellt ist. Beide Motoren sind hintereinander an die Antriebswelle des Propellers angekoppelt. Der als "Booster-Antrieb" bezeichnete Elektromotor mit einer Nennleistung von 2 bis 15 MW, wobei diese Nennleistung wenigstens 10 % der Nennleistung des Dieselmotors beträgt, ist dem Dieselmotor zur Unterstützung zugeordnet, um in speziellen Fahrsituationen, z. B. in der Anfahrphase, in der Beschleunigungsphase im mittleren Geschwindigkeitsbereich sowie in der Vollastphase, Nachteile auszugleichen, die in diesen Betriebsphasen für den Dieselmotor charakteristisch sind (Prospekt "Electrical Booster Drives" der Siemens AG Seiten 1 bis 9; US 4417878 A, DE 4432483 A1).

Ausgehend von einer Antriebseinrichtung mit den Merkmalen des Oberbegriffes des Patentanspruches 1 (siehe z.B. DE 1638854 A) liegt der Erfindung die Aufgabe zugrunde, die Antriebseinrichtung so auszugestalten, daß vor allem im niedrigen Drehzahlbereich ein besserer Wirkungsgrad erreichbar ist.

Zur Lösung dieser Aufgabe ist gemäß der Erfindung vorgesehen, daß auf der Antriebswelle ein zweiter ebenfalls als mehrsträngiger Wechselstrommotor mit Stromrichterspeisung ausgebildeter Elektromotor angeordnet ist und das die beiden Elektromotoren sich in ihrer Nennleistung derart unterscheiden, daß das Leistungsverhältnis größer/gleich 20: 1 ist.

Bei einer gemäß der Erfindung ausgebildeten Antriebseinrichtung ist berücksichtigt, daß für den unteren Drehzahlbereich bis etwa 30 % der Nenndrehzahl nur eine Antriebsleistung von weniger als 1/20 der maximalen Antriebsleistung erforderlich ist. Dementsprechend ist für diesen Drehzahlbereich ein eigener Antriebsmotor kleinerer Leistung vorgesehen, der all die mechanischen, elektrischen und akustischen Randbedingungen erfüllen muß, die für ein Marineschiff der in Rede stehenden Art bei langsamer Fahrt charakteristisch sind. Der Antriebsmotor großer Leistung ist dagegen für Schnellfahrt konzipiert, bei der die extremen Körperschallforderungen, wie sie für Langsamfahrt bestehen, nicht mehr gelten. Es werden somit die erhöhten akustischen und elektrischen Anforderungen nur für einen kleinen Antriebsmotor realisiert, während der größere Antriebsmotor geringeren Anforderungen genügen kann. Durch Optimierung des kleinen Antriebsmotors wird im unteren Leistungsbereich der Gesamtwirkungsgrad verbessert. Dieser Vorteil kommt um so mehr zum tragen, je größer die Leistungsanforderungen bezüglich der Schnellfahrt sind, wenn also Leistungsverhältnisse der beiden Antriebsmotoren von mehr als 50:1 realisiert werden sollen, also beispielsweise 8 MW/150kW.

Für den Antriebsmotor kleinerer Leistung kommt insbesondere ein Synchronmotor mit permanentmagneterregtem Läufer in Betracht. Es kann aber auch eine bürstenlose, gleichstromerregte Schenkelpolmaschine eingesetzt werden. - Da der Antriebsmotor größerer Leistung geringeren Anforderungen als der Antriebsmotor kleinerer Leistung genügen muß, kann er auch als Asynchronmotor ausgebildet sein. Gehobenen Anforderungen könnte ein Synchronmotor mit gleichstromerregtem Vollpolläufer oder Schenkelpolläufer genügen, während im Fall höchster Anforderungen auch ein Synchronmotor mit permanentmagneterregtem Läufer in Betracht kommt.

Bei einer gemäß der Erfindung ausgebildeten Antriebseinrichtung können die beiden Antriebsmotoren eine kompakte, kostengünstig herstellbare und montierbare Baueinheit bilden, wenn die Wellen der beiden Antriebsmotoren über Flanschverbindungen starr miteinander verbunden sind. Zweckmäßig sind dabei die beiden Läufer der Antriebsmotoren gemeinsam in zwei beidseits der Läufer angeordneten Lagern gelagert. - Weitere Kostenvorteile können erreicht werden, wenn nur für den Antriebsmotor kleinerer Leistung eine Wasserkühlung vorgesehen ist, während dem Antriebsmotor größerer Leistung eine Luftkühlung zugeordnet ist. Gleichartige Vorteile ergeben sich, wenn jedem der beiden Antriebsmotore eine eigene Leistungselektronikeinheit zugeordnet ist.

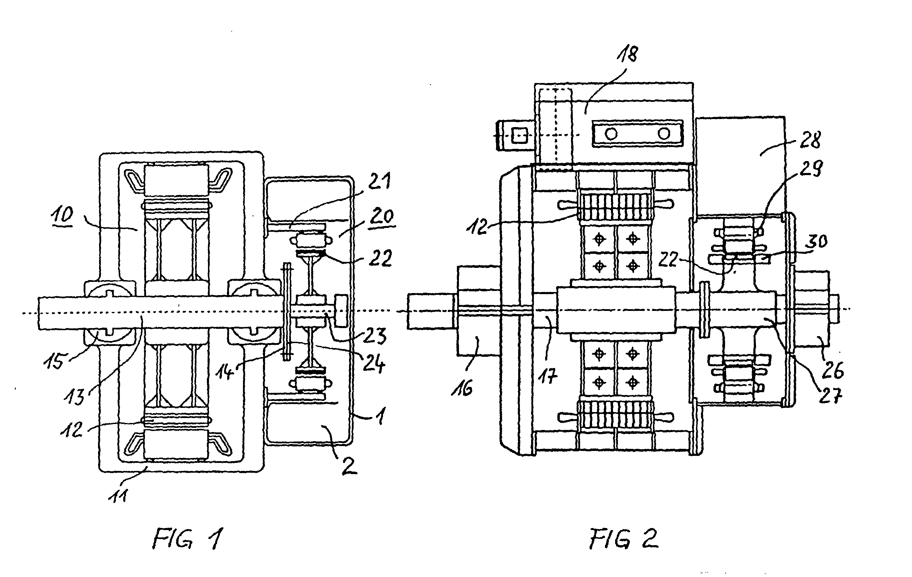

Zwei Ausführungsbeispiele der neuen Antriebseinrichtung sind in den Figuren 1 und 2 schematisch dargestellt. Dabei zeigt
- Figur 1: eine Antriebseinrichtung, bei der der Läufer des Antriebsmotors kleinerer Leistung fliegend an die Läuferwelle des Antriebsmotors größerer Leistung angekoppelt ist, und
- Figur 2: eine Antriebseinrichtung, bei der die Läufer der beiden Antriebsmotore gemeinsam zwischen zwei Lagern gelagert sind.

Figur 1 zeigt eine Antriebseinrichtung, bei der ein erster elektrischer Antriebsmotor 10 größerer Leistung und ein zweiter elektrischer Antriebsmotor 20 kleinerer Leistung unmittelbar nebeneinander angeordnet sind. Hierzu sind die beiden Statorgehäuse 11 und 21 der Antriebsmotoren miteinander verbunden. Weiterhin ist an die Welle 13 des Antriebsmotors 10, auf der der Läufer 12 aufsitzt, die Welle 23 des Antriebsmotors 20, auf der der Läufer 22 aufsitzt, mittels Kupplungsflanschen 11 und 21 angeflanscht. Dem Antriebsmotor 20 kleinerer Leistung ist ein konzentrisch zum Motor angeordnetes Gehäuse 1 zugeordnet, welches einen Ringraum 2 bildet. In diesem Ringraum können die Leistungselektronik sowie Kühlpumpen und weitere zum Betrieb des Antriebsmotors 20 erforderliche Aggregate angeordnet sein.

Sowohl der Antriebsmotor 10 als auch der Antriebsmotor 20 sind als mehrsträngige Wechselstrommotoren mit Stromrichterspeisung ausgebildet, wobei es sich bei dem Antriebsmotor kleinerer Leistung 20 um einen Synchronmotor mit permanenterregtem Läufer handelt, während der größere Antriebsmotor 10 als Asynchronmotor ausgebildet ist. Der Antriebsmotor 10 kann beispielsweise eine Nennleistung von 4 MW in einem Drehzahlbereich von etwa 45 bis 150 min⁻¹ aufweisen. Der Antriebsmotor 20 dagegen weist beispielsweise in einem Drehzahlbereich von 0 bis 46 min⁻¹ eine Nennleistung von etwa 150 kW auf.

Die Leistungselektronik für den Antriebsmotor 10, die wesentlich mehr Raum einnimmt als die Antriebselektronik für den Antriebsmotor 20, ist zweckmäßig in eine separate Schaltanlage eingebaut, die neben dem Motor 10 aufgestellt sein kann.

Die Antriebseinrichtung gemäß Figur 2 ist im Prinzip gleichartig aufgebaut wie die Antriebseinrichtung gemäß Figur 1. Ein wesentlicher Unterschied besteht in der Anordnung der beiden Lager 16 und 26. Abweichend von dem Ausführungsbeispiel gemäß Figur 1, bei dem mittels der Kupplungsflansche 14 und 24 eine fliegende Lagerung des Rotors 22 des Antriebsmotors 20 vorgesehen ist, sind hier die Wellen 17 und 27 der Läufer der beiden Antriebsmotoren derart aneinander angepaßt, daß sie ein gemeinsames Wellenstück bilden, welches beidseits der beiden Läufer gemeinsam in den beiden Lagern 16 und 26 gelagert ist.

Bei dem Ausführungsbeispiel gemäß Figur 2 sind die Leistungselektronik sowie Kühlpumpen und elektronische Einheiten wie Drehzahl und Überwachungsrechner in einem auf den Antriebsmotor aufgesetzten Gehäuse 28 untergebracht, während auf den Antriebsmotor größerer Leistung die Kühleinrichtung 18 aufgesetzt ist, die im wesentlichen aus einem Gebläse und einem Luft/Wasser-Rückkühler besteht.

Für die Kühlung des Startors des Antriebsmotors kleinerer Leistung ist eine Wasserkühlung vorgesehen, wobei die entsprechenden Kühlanschlüsse 29 schematisch angedeutet sind. Der Rotor des Antriebsmotors kleinerer Leistung ist noch mit Lüfterflügeln 30 versehen, welche die Kühlung der Wickelköpfe des Startors unterstützen.

## Patentansprüche

1. Antriebseinrichtung für ein Schiff, das im wesentlichen zwei Betriebsbereiche für einen über eine Antriebswelle elektromotorisch direkt angetriebenen Propeller aufweist, nämlich einen ersten Betriebsbereich für Propellerdrehzahlen bis etwa 30 % der Nenndrehzahl und einen zweiten Betriebsbereich für die darüber hinaus gehenden Propellerdrehzahlen bis zur Nenndrehzahl,
bei der als Antriebsmotor (10) ein mehrsträngiger Wechselstrommotor mit Stromrichterspeisung vorgesehen ist,
**dadurch gekennzeichnet,**
**daß** auf der Antriebswelle (13, 23) ein zweiter, ebenfalls als mehrsträngiger Wechselstrommotor mit Stromrichterspeisung ausgebildeter Elektromotor (20) angeordnet ist
und **daß** die beiden Elektromotoren (10, 20) sich in ihrer Nennleistung derart unterscheiden, daß das Leistungsverhältnis größer/gleich 20:1 ist.

2. Antriebseinrichtung nach Anspruch 1,
**dadurch gekennzeichnet,**
**daß** der Antriebsmotor (20) kleinerer Leistung als gleichstromerregte Schenkelpolmaschine ausgebildet ist.

3. Antriebseinrichtung nach Anspruch 1,
**dadurch gekennzeichnet,**
**daß** der Antriebsmotor (20) kleinerer Leistung einen permanentmagneterregten Läufer aufweist.

4. Antriebseinrichtung nach einem der Ansprüche 1 bis 3,
**dadurch gekennzeichnet,**
**daß** der Antriebsmotor (10) größerer Leistung als Asynchronmotor ausgebildet ist.

5. Antriebseinrichtung nach einem der Ansprüche 1 bis 3,
**dadurch gekennzeichnet,**
**daß** der Antriebsmotor (10) größerer Leistung als Synchronmotor mit permanenterregtem Läufer ausgebildet ist.

6. Antriebseinrichtung nach einem der Ansprüche 1 bis 3,
**dadurch gekennzeichnet,**
**daß** der Antriebsmotor (10) größerer Leistung als Synchronmotor mit gleichstromerregtem Vollpolläufer oder Schenkelpolläufer ausgebildet ist.

7. Antriebseinrichtung nach einem der Ansprüche 1 bis 6,
**dadurch gekennzeichnet,**
**daß** das Leistungsverhältnis der beiden Antriebsmotoren größer als 50:1 ist.

8. Antriebseinrichtung nach einem der Ansprüche 1 bis 7,
**dadurch gekennzeichnet,**
**daß** die Wellen (13, 23) der beiden Antriebsmotoren (10, 20) über eine Flanschverbindung (14, 24) starr miteinander verbunden sind.

9. Antriebseinrichtung nach einem der Ansprüche 1 bis 8,
**dadurch gekennzeichnet,**
**daß** die beiden-Läufer (12, 22) der Antriebsmotoren gemeinsam in zwei beidseits der Läufer angeordneten Lagern (16, 26) gelagert sind.

10. Antriebseinrichtung nach einem der Ansprüche 1 bis 9,
**dadurch gekennzeichnet,**
**daß** der Antriebsmotor (20) kleinerer Leistung eine Wasserkühlung (29) enthält, die aus dem
Frischwasserkühlkreislauf des Schiffes gespeist wird, und daß dem Antriebsmotor (10) größerer Leistung eine Luftkühlung (18) zugeordnet ist.

11. Antriebseinrichtung nach einem der Ansprüche 1 bis 10,
**dadurch gekennzeichnet,**
**daß** jedem der beiden Antriebsmotoren (10, 20) eine eigene Leistungselektronikeinheit zugeordnet ist.

12. Antriebseinrichtung nach Anspruch 11,
**dadurch gekennzeichnet,**
**daß** die Leistungselektronikeinheit des Antriebsmotors (20) kleinerer Leistung in dem Gehäuse (1, 28) dieses Antriebsmotors untergebracht ist.

## Claims

1. Propulsion device for a ship which has, essentially, two operating ranges for a propeller, which has direct electrical motor drive via a drive shaft, namely a first operating range for propeller rotational speeds up to approximately 30% of the rated rotational speed and a second operating range for the propeller rotational speeds extending beyond this speed up to the rated rotational speed, in which a multiphase alternating current motor with static converter supply is provided as drive motor (10), **characterised in that** a second electric motor (20), which is likewise configured as a multiphase alternating current motor with static converter supply, is arranged on the drive shaft (13, 23) and **in that** the two electric motors (10, 20) differ in their rated power in such a way that the power ratio is greater than/equal to 20:1.

2. Propulsion device according to Claim 1, **characterised in that** the smaller power drive motor (20) is configured as a salient pole machine excited by direct current.

3. Propulsion device according to Claim 1, **characterised in that** the smaller power drive motor (20) has a rotor with permanent magnet excitation.

4. Propulsion device according to one of Claims 1 to 3, **characterised in that** the higher power drive motor (10) is configured as an asynchronous motor.

5. Propulsion device according to one of Claims 1 to 3, **characterised in that** the higher power drive motor (10) is configured as a synchronous motor with permanently excited rotor.

6. Propulsion device according to one of Claims 1 to 3, **characterised in that** the higher power drive motor (10) is configured as a synchronous motor with non-salient pole rotor or salient pole rotor excited by direct current.

7. Propulsion device according to one of Claims 1 to 6, **characterised in that** the power ratio between the two drive motors is greater than 50:1.

8. Propulsion device according to one of Claims 1 to 7, **characterised in that** the shafts (13, 23) of the two drive motors (10, 20) are rigidly connected together by means of a flange connection (14, 24).

9. Propulsion device according to one of Claims 1 to 8, **characterised in that** the two rotors (12, 22) of the drive motors are jointly supported in the two bearings (16,26) arranged at both ends of the rotors.

10. , Propulsion device according to one of Claims 1 to 9, **characterised in that** the lower power drive motor (20) includes a water cooling system (29), which is supplied from the fresh-water cooling circuit of the ship, and **in that** an air cooling system (18) is associated with the higher power drive motor (10).

11. Propulsion device according to one of Claims 1 to 10, **characterised in that** each of the two drive motors (10, 20) has its own power electronics unit associated with it.

12. Propulsion device according to Claim 11, **characterised in that** the power electronics unit of the lower power drive motor (20) is accommodated in the casing (1, 28) of this drive motor.

## Revendications

1. Dispositif d'entraînement pour un bateau qui comporte essentiellement deux plages de fonctionnement pour une hélice entraînée directement par moteur électrique par l'intermédiaire d'un arbre moteur, à savoir une première plage de fonctionnement pour des vitesses de rotation d'hélice allant jusqu'à 30 % environ de la vitesse de rotation nominale et une deuxième plage de fonctionnement pour les vitesses de rotation d'hélice supérieures allant jusqu'à la vitesse de rotation nominale, un moteur à courant alternatif polyphasé avec alimentation par convertisseur étant prévu comme moteur d'entraînement (10), **caractérisé par le fait qu'**un deuxième moteur électrique (20) également conçu comme un moteur à courant alternatif polyphasé avec alimentation par convertisseur est monté sur l'arbre moteur (13, 23) et que les deux moteurs électriques (10, 20) se distinguent par leur puissance nominale de telle sorte que le rapport de puissance est supérieur ou égal à 20 : 1.

2. Dispositif d'entraînement selon la revendication 1, **caractérisé par le fait que** le moteur d'entraînement (20) de petite puissance est conçu comme une machine à pôles saillants à excitation par courant continu.

3. Dispositif d'entraînement selon la revendication 1, **caractérisé par le fait que** le moteur d'entraînement (20) de petite puissance comporte un rotor à aimant permanent.

4. Dispositif d'entraînement selon l'une des revendications 1 à 3, **caractérisé par le fait que** le moteur d'entraînement (10) de grande puissance est conçu comme un moteur asynchrone.

5. Dispositif d'entraînement selon l'une des revendications 1 à 3, **caractérisé par le fait que** le moteur d'entraînement (10) de grande puissance est conçu comme un moteur synchrone avec rotor à aimant permanent.

6. Dispositif d'entraînement selon l'une des revendications 1 à 3, **caractérisé par le fait que** le moteur d'entraînement (10) de grande puissance est conçu comme un moteur synchrone avec rotor à pôles lisses ou à pôles saillants à excitation par courant continu.

7. Dispositif d'entraînement selon l'une des revendications 1 à 6, **caractérisé par le fait que** le rapport de puissance des deux moteurs d'entraînement est supérieur à 50 : 1.

8. Dispositif d'entraînement selon l'une des revendications 1 à 7, **caractérisé par le fait que** les arbres (13, 23) des deux moteurs d'entraînement (10, 20) sont assemblés de façon solidaire par l'intermédiaire de brides (14, 24).

9. Dispositif d'entraînement selon l'une des revendications 1 à 8, **caractérisé par le fait que** les deux rotors (12, 22) des moteurs d'entraînement sont montés ensemble dans deux paliers (16, 26) disposés des deux côtés des rotors.

10. Dispositif d'entraînement selon l'une des revendications 1 à 9, **caractérisé par le fait que** le moteur d'entraînement (20) de petite puissance contient un refroidissement par eau (29) qui est alimenté à partir du circuit de refroidissement à eau fraîche du bateau et qu'un refroidissement par air (18) est associé au moteur d'entraînement (10) de grande puissance.

11. Dispositif d'entraînement selon l'une des revendications 1 à 10, **caractérisé par le fait qu'**une unité électronique de puissance particulière est associée à chacun des deux moteurs d'entraînement (10, 20).

12. Dispositif d'entraînement selon la revendication 11, **caractérisé par le fait que** l'unité électronique de puissance du moteur d'entraînement (20) de petite puissance est placée dans le carter (1, 28) de ce moteur d'entraînement.
